(19) **Europäisches Patentamt / European Patent Office / Office européen des brevets**

(11) **EP 2 916 159 B1**

(12) **EUROPEAN PATENT SPECIFICATION**

(45) Date of publication and mention
of the grant of the patent:
**22.04.2020 Bulletin 2020/17**

(21) Application number: **13851604.2**

(22) Date of filing: **24.07.2013**

(51) Int Cl.:
*G02B 21/36* (2006.01)    *G02B 7/28* (2006.01)
*G02B 7/36* (2006.01)    *G02B 21/18* (2006.01)
*H04N 5/225* (2006.01)    *H04N 5/232* (2006.01)
*G02B 21/24* (2006.01)    *H04N 5/222* (2006.01)

(86) International application number:
**PCT/JP2013/070079**

(87) International publication number:
**WO 2014/069055 (08.05.2014 Gazette 2014/19)**

(54) **IMAGE ACQUISITION DEVICE AND IMAGE ACQUISITION METHOD**

BILDAUFNAHMEVORRICHTUNG UND BILDAUFNAHMEVERFAHREN

DISPOSITIF ET PROCÉDÉ D'ACQUISITION D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2012 JP 2012240493**

(43) Date of publication of application:
**09.09.2015 Bulletin 2015/37**

(60) Divisional application:
**18151359.9 / 3 333 612
18151360.7 / 3 333 613
18151361.5 / 3 333 614**

(73) Proprietor: **Hamamatsu Photonics K.K.
Hamamatsu-shi, Shizuoka 435-8558 (JP)**

(72) Inventors:
• **OKUGAWA, Masatoshi**
**Hamamatsu-shi, Shizuoka 435-8558 (JP)**
• **OISHI, Hideshi**
**Hamamatsu-shi, Shizuoka 435-8558 (JP)**

(74) Representative: **Hoffmann Eitle
Patent- und Rechtsanwälte PartmbB
Arabellastraße 30
81925 München (DE)**

(56) References cited:
**WO-A2-2011/049608**    **JP-A- 2005 202 092**
**JP-A- 2008 500 586**    **JP-A- 2010 191 000**
**JP-A- 2011 081 211**    **US-A1- 2005 270 611**
**US-A1- 2007 200 051**

**Description**

**Technical Field**

The present invention relates to an image capturing apparatus used for capturing of images of a sample or the like, and an image capturing method thereby.

**Background Art**

According to JP 2005 202092 A, a maximum focal position is detected by making laser slit light from laser spot light by a laser diode, projecting the laser slit light onto the surface of the sample, imaging the laser slit light reflected from the sample on a line sensor arranged vertically to the optical axis via a half mirror, shifting the line sensor in the direction of the optical axis, characterizing a moving distance and a high-frequency component amount of the line sensor image, and detecting a moving distance at which the high-frequency component amount of the line sensor image is maximized.

As an image capturing apparatus there is a virtual microscope device, for example, configured to preliminarily divide an imaging region of a sample into a plurality of regions, capture images of the respective segmented regions at a high magnification, and thereafter synthesize these images. The conventional image capturing with such a virtual microscope is carried out as follows: a focus map for an entire region of the sample as an object is set as an imaging condition in capturing images of the sample such as a biological sample, and the image capturing of the sample is carried out while performing focus control based on the focus map.

For creation of the focus map, a macro image of the entire sample is first captured with use of an image capturing apparatus having a macro optical system. Next, an imaging range of the sample is set using the captured macro image, the imaging range is divided into a plurality of segmented regions, and focus acquisition positions are set for the respective segmented regions. After the focus acquisition positions are set, the sample is transferred to an image capturing apparatus having a micro optical system, focus positions are captured at the set focus acquisition positions, and the focus map is created from these focus positions.

However, there was a problem that the creation of the focus map as described above needed some time for processing. The time necessary for processing can be reduced by decreasing the interval and number of focuses to be acquired, but in that case there arose another problem of reduction in focus accuracy. For this reason, development of dynamic focus has been advanced to capture high-magnification images of the sample while acquiring the focus positions. This method is a method of detecting a deviation direction of a focus position with respect to a current height of an objective lens, based on a light intensity difference or contrast difference between an optical image which is focused at the front of an optical image made incident into an imaging device for capturing an image (front focus) and an optical image which is focused at the rear thereof (rear focus), moving the objective lens in a direction to cancel the deviation, and then capturing an image (e.g., cf. Patent Literature 1).

On the other hand, there is a method using the conventional virtual microscope not using the dynamic focus, to capture a set of Z-plane images at different focus positions for a sample with some thickness (images on planes in focus at positions indicated by broken lines in Fig. 16) (Z-stack images). For example, Patent Literature 2 below discloses a method to capture the Z-stack images by moving the objective lens relatively to a sample stage (e.g., by advancing the Z-plane level downward).

**Citation List**

**Patent Literatures**

Patent Literature 1: Japanese Patent Application Laid-open Publication No. 2011-081211
Patent Literature 2: Japanese Patent Application Laid-open Publication No. 2008-500643

**Summary of Invention**

**Technical Problem**

For capturing the Z-stack by moving the objective lens relatively to the sample stage as in the above-cited Patent Literature 2, it is necessary to use information of a reference position of the objective lens such as the focus map. However, the focus map is not acquired in the dynamic focus and thus the foregoing information of the reference position of the objective lens is not available. Therefore, in the case of the dynamic focus being used, it is difficult to capture the Z-stack images by adopting the method of simply moving the objective lens relatively to the sample stage.

The present invention has been accomplished in order to solve the above problem and it is an object of the present invention to provide an image capturing apparatus and an image capturing method thereby capable of readily capturing the Z-stack images in capturing the images by the dynamic focus.

## Solution to Problem

The problem of the invention is solved by the subject-matter of the independent claims. Advantageous embodiments are disclosed in the dependent claims.

In order to solve the above problem, an image capturing apparatus according to an example comprises: a stage on which a sample is placed; a stage control unit which scans the stage at a predetermined speed; a light source which radiates light to the sample; a light guiding optical system including a light dividing unit which divides an optical image of the sample into a first optical path for capturing an image and a second optical path for focus control; a first imaging unit which captures a first image by a first optical image divided into the first optical path; a second imaging unit which captures a second image by a second optical image divided into the second optical path; a focus control unit which analyzes the second image so as to control a focus position of the image pickup by the first imaging unit based on the analysis result; and an optical-path-difference changing unit which changes an optical path difference between the first optical path and the second optical path based on a predetermined target focus interval, wherein every time the optical-path-difference changing unit changes the optical path difference, while the focus control unit controls the focus position, the stage control unit scans the stage and the first imaging unit captures the first image, thereby capturing Z-stack images consisting of a plurality of the first images in a depth direction of the sample.

This image capturing apparatus comprises the optical-path-difference changing unit which changes the optical path difference between the first optical path and the second optical path. The focus position of the image pickup by the first imaging unit varies (or moves) in the depth direction of the sample according to the foregoing optical path difference changed by the optical-path-difference changing unit. Therefore, every time the optical-path-difference changing unit changes the optical path difference based on the predetermined target focus interval, while the focus control unit controls the focus position of the image pickup by the first imaging unit, the stage control unit scans the stage and the first imaging unit captures the first image, whereby the apparatus can readily capture the Z-stack images consisting of the first images in the depth direction of the sample according to the change of the optical path difference. Since this technique comprises performing the dynamic focus by the focus control unit after the change of the optical path difference, the apparatus captures the Z-stack images consisting of images of sections along curved surfaces approximately similar to the surface shape (relief) of the sample, different from the images of sections of the sample by XY planes parallel to the stage plane.

The optical-path-difference changing unit may move the second imaging unit along an optical-axis direction of the second optical path based on a moving distance calculated by Formula (1) below. In this manner, the second imaging unit may be moved based on the below Formula (1) so as to change the optical path difference between the first optical path and the second optical path, whereby the apparatus can capture the first images at a plurality of focus positions with the predetermined target focus interval in between.

The optical-path-difference changing unit may move the first imaging unit along an optical-axis direction of the first optical path based on a moving distance calculated by Formula (2) below. In this manner, the first imaging unit may be moved based on the below Formula (2) so as to change the optical path difference between the first optical path and the second optical path as well, whereby the apparatus can also capture the first images at a plurality of focus positions with the predetermined target focus interval in between.

$$\text{Moving distance} = \text{the predetermined target focus interval} \times (\text{a square of an optical magnification in the second optical path}) \qquad (1)$$

$$\text{Moving distance} = \text{the predetermined target focus interval} \times (\text{a square of an optical magnification in the first optical path}) \qquad (2)$$

The image capturing apparatus may further comprise: region control unit which sets at an imaging area of the second imaging unit a first imaging region and a second imaging region for capturing a partial image of the second optical image; and an optical-path-difference producing member which is disposed on the second optical path, having a portion whose thickness continuously varies along an in-plane direction of the imaging area, and giving an optical path difference to the second optical image along the in-plane direction of the imaging area, wherein the optical-path-difference changing unit may make the region control unit change set positions of the first imaging region and the second imaging region based on a rate of variation of the thickness in the in-plane direction of the imaging area and the target focus interval. In this manner, the set positions of the first imaging region and the second imaging region may be changed so as to change the optical path difference between the first optical path and the second optical path as well, whereby the apparatus can also capture the first images at a plurality of focus positions with the predetermined target focus interval in between.

An image capturing method according to an example is an image capturing method by an image capturing apparatus comprising: a stage on which a sample is placed; a stage control unit which scans the stage at a predetermined speed; a light source which radiates light to the sample; a light guiding optical system including a light dividing unit which divides an optical image of the sample into a first optical path for capturing an image and a second optical path for focus control; a first imaging unit which captures a first image by a first optical image divided into the first optical path; a second imaging unit which captures a second image by a second optical image divided into the second optical path; a focus control unit which analyzes the second image so as to control a focus position of the image pickup by the first imaging unit based on the analysis result; and an optical-path-difference changing unit which changes an optical path difference between the first optical path and the second optical path based on a predetermined target focus interval, wherein the method comprises, every time changing the optical path difference by the optical-path-difference changing unit, while controlling the focus position by the focus control unit, scanning the stage by the stage control unit and capturing the first image by the first imaging unit, thereby capturing Z-stack images consisting of a plurality of the first images in a depth direction of the sample.

Making use of the fact that the focus position of the image pickup by the first imaging unit varies (or moves) in the depth direction of the sample according to the optical path difference between the first optical path and the second optical path, this image capturing method comprises every time changing the optical path difference between the first optical path and the second optical path, while controlling the focus position of the image pickup by the first imaging unit, scanning the stage and capturing the first image by the first imaging unit. This allows the method to readily capture the Z-stack images consisting of a plurality of first images in the depth direction of the sample according to the change of the optical path difference. In this technique, the dynamic focus is carried out every change of the optical path difference, whereby the method can capture the Z-stack images consisting of the images of sections along curved surfaces approximately similar to the surface shape (relief) of the sample, different from the images of sections of the sample by XY planes parallel to the stage plane.

The method may comprise moving the second imaging unit along an optical-axis direction of the second optical path by the optical-path-difference changing unit based on a moving distance calculated by Formula (1) below. In this manner, the second imaging unit may be moved based on the below Formula (1) so as to change the optical path difference between the first optical path and the second optical path, whereby the method can capture the first images at a plurality of focus positions with the predetermined target focus interval in between.

The method may comprise moving the first imaging unit along an optical-axis direction of the first optical path by the optical-path-difference changing unit based on a moving distance calculated by Formula (2) below. In this manner, the first imaging unit may be moved based on the below Formula (2) so as to change the optical path difference between the first optical path and the second optical path as well, whereby the method can also capture the first images at a plurality of focus positions with the predetermined target focus interval in between.

$$\text{Moving distance} = \text{the predetermined target focus interval} \times (\text{a square of an optical magnification in the second optical path}) \quad (1)$$

$$\text{Moving distance} = \text{the predetermined target focus interval} \times (\text{a square of an optical magnification in the first optical path}) \quad (2)$$

The image capturing apparatus may further comprise: region control unit which sets at an imaging area of the second imaging unit a first imaging region and a second imaging region for capturing a partial image of the second optical image; and an optical-path-difference producing member which is disposed on the second optical path, having a portion whose thickness continuously varies along an in-plane direction of the imaging area, and giving an optical path difference to the second optical image along the in-plane direction of the imaging area, wherein the method may comprise changing set positions of the first imaging region and the second imaging region by the region control unit based on a rate of variation of the thickness in the in-plane direction of the imaging area and the target focus interval. In this manner, the set positions of the first imaging region and the second imaging region may be changed so as to change the optical path difference between the first optical path and the second optical path as well, whereby the method can also capture the first images at a plurality of focus positions with the predetermined target focus interval in between.

**Advantageous Effect of Invention**

The present invention enables the Z-stack images to be readily captured in capturing the images by the dynamic focus.

**Brief Description of Drawings**

Fig. 1 is a drawing showing one embodiment of a macro image capturing device which constitutes an image capturing apparatus according to the present invention.
Fig. 2 is a drawing showing one embodiment of a micro image capturing device which constitutes the image capturing apparatus according to the present invention.
Fig. 3 is a drawing showing a second imaging device.
Fig. 4 is a drawing showing an example of a combination of an optical-path-difference producing member and the second imaging device.
Fig. 5 is a drawing showing an example of the optical-path-difference producing member whose thickness continuously varies along an in-plane direction of an imaging area of the second imaging device.
Fig. 6 is a block diagram showing functional components of the image capturing apparatus.
Fig. 7 is a drawing showing an analysis result of contrast values in a situation where a distance to the surface of a sample is coincident with the focal length of an objective lens.
Fig. 8 is a drawing showing an analysis result of contrast values in a situation where a distance to the surface of the sample is longer than the focal length of the objective lens.
Fig. 9 is a drawing showing an analysis result of contrast values in a situation where a distance to the surface of the sample is shorter than the focal length of the objective lens.
Fig. 10 is a drawing showing a relationship of the distance between the objective lens and the stage with respect to scanning time of the stage.
Fig. 11 is a drawing showing control of a scanning direction of the stage by a stage control portion.
Fig. 12 is a drawing showing control of a scanning speed of the stage by the stage control portion.
Fig. 13 is a drawing used for explaining Z-stack images captured by the image capturing apparatus according to one embodiment of the present invention.
Fig. 14 is a drawing used for explaining a method for changing an optical path difference between a first optical path and a second optical path by moving positions of a first imaging region and a second imaging region.
Fig. 15 is a flowchart showing an operation of the image capturing apparatus according to one embodiment of the present invention.
Fig. 16 is a drawing used for explaining the Z-stack images captured by a conventional image capturing apparatus.

**Description of Embodiments**

Preferred embodiments of the image capturing apparatus and the image capturing method thereby according to the present invention will be described below in detail with reference to the drawings.

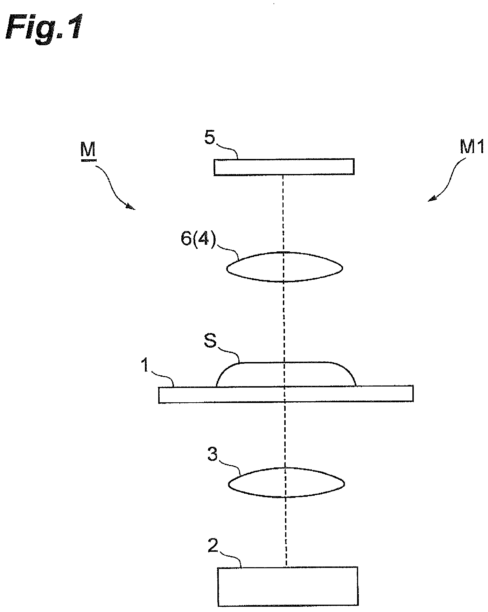

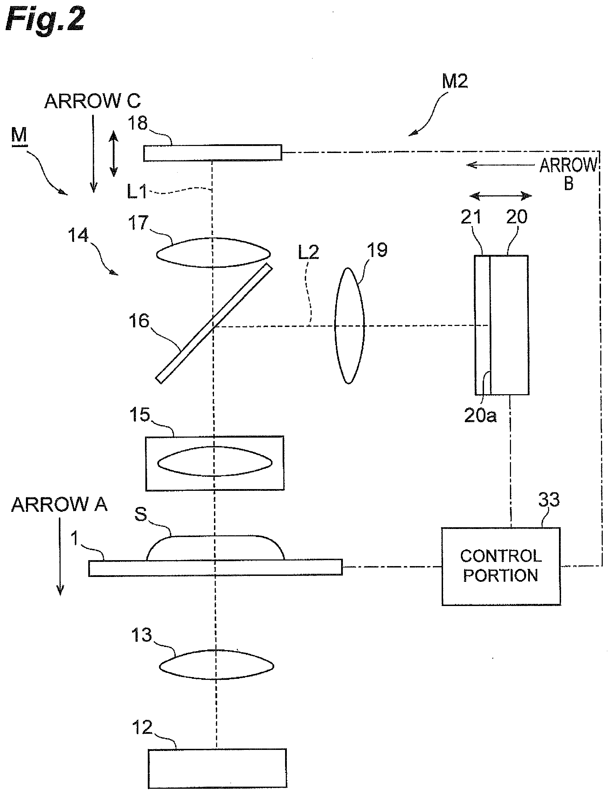

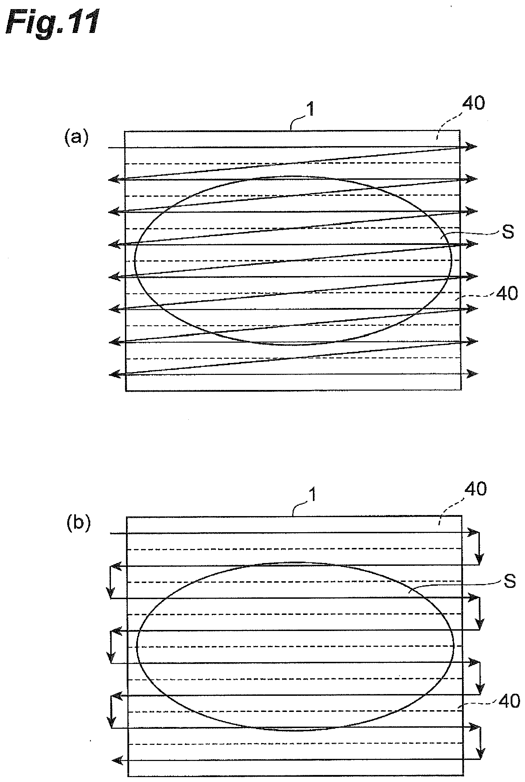

Fig. 1 is a drawing which shows one embodiment of the macro image capturing device which constitutes the image capturing apparatus of the present invention. Fig. 2 is a drawing which shows one embodiment of the micro image capturing device which constitutes the image capturing apparatus of the present invention. As shown in Fig. 1 and Fig. 2, an image capturing apparatus M is constituted with a macro image capturing device M1 for capturing a macro image of a sample S and a micro image capturing device M2 for capturing a micro image of the sample S. The image capturing apparatus M is an apparatus which sets, for example, a plurality of line-shaped divided regions 40 with respect to the macro image captured by the macro image capturing device M1 (refer to Fig. 11) and produces a virtual micro image by capturing and synthesizing each of the divided regions 40 by the micro image capturing device M2 at a high magnification.
As shown in Fig. 1, the macro image capturing device M1 is provided with a stage 1 which supports the sample S. The stage 1 is an XY stage which is actuated in a horizontal direction by a motor or an actuator such as a stepping motor (pulse motor) or a piezo actuator, for example. The sample S which is observed by using the image capturing apparatus M is, for example, a biological sample such as cells and placed on the stage 1 in a state of being sealed on a slide glass. The stage 1 is actuated inside the XY plane, by which an imaging position with respect to the sample S is allowed to move.

The stage 1 is able to move back and forth between the macro image capturing device M1 and the micro image capturing device M2 and provided with functions to deliver the sample S between the devices. It is acceptable that when a macro image is captured, an entire image of the sample S is picked up at one time or the sample S is divided into a plurality of regions to pick up each of the images. It is also acceptable that the stage 1 is installed both on the macro image capturing device M1 and on the micro image capturing device M2.

A light source 2 which radiates light to the sample S and a condensing lens 3 which concentrates light from the light source 2 at the sample S are disposed on a bottom of the stage 1. It is acceptable that the light source 2 is disposed so as to radiate light obliquely to the sample S. Further, a light guiding optical system 4 which guides an optical image from the sample S and an imaging device 5 which images the optical image of the sample S are disposed on an upper face of the stage 1. The light guiding optical system 4 is provided with an image forming lens 6 which forms the optical image from the sample S at an imaging area of the imaging device 5. Still further, the imaging device 5 is an area sensor which is capable of capturing, for example, a two-dimensional image. The imaging device 5 captures an entire image of the optical image of the sample S made incident into the imaging area via the light guiding optical system 4 and is housed at a virtual micro image storage 39 to be described later.

As shown in Fig. 2, the micro image capturing device M2 is provided on the bottom of the stage 1 with a light source 12 and a condensing lens 13, as with the macro image capturing device M1. Further, a light guiding optical system 14 which guides an optical image from the sample S is disposed on the upper face of the stage 1. The optical system which radiates light from the light source 12 to the samples may include an excitation light radiating optical system which radiates excitation light to the sample S and a dark-field illuminating optical system which captures a dark-field image of the sample S.

The light guiding optical system 4 is provided with an objective lens 15 disposed so as to face to the sample S and a beam splitter (light dividing unit) 16 disposed at a rear stage of the objective lens 15. The objective lens 15 is provided with a motor and an actuator such as a stepping motor (pulse motor) or a piezo actuator for actuating the objective lens 15 in a Z direction orthogonal to a face on which the stage 1 is placed. A position of the objective lens 15 in the Z direction is changed by these actuation units, thus making it possible to adjust a focus position of image pickup when an image of the sample S is captured. It is acceptable that the focus position is adjusted by changing a position of the stage 1 in the Z direction or by changing positions of both the objective lens 15 and the stage 1 in the Z direction.

The beam splitter 16 is a portion which divides an optical image of the sample S into a first optical path L1 for capturing an image and a second optical path L2 for focus control. The beam splitter 16 is disposed at an angle of approximately 45 degrees with respect to an optical axis from the light source 12. In Fig. 2, an optical path passing through the beam splitter 16 is given as the first optical path L1, while an optical path reflected at the beam splitter 16 is given as the second optical path.

On the first optical path L1, there are disposed an image forming lens 17 which forms the optical image of the sample S (first optical image) which has passed through the beam splitter 16 and a first imaging device (first imaging unit) 18 in which an imaging area is disposed at an image forming position of the image forming lens 17. The first imaging device 18 is a device which is capable of capturing a one-dimensional image (first image) by the first optical image of the sample S and is configured so as to be movable by an arbitrary distance in both directions along the optical-axis direction of the first optical path L1. The first imaging device 18 to be used is, for example, a two-dimension CCD sensor or a line sensor capable of realizing TDI (time delay integration) actuation. Further, in a method which captures images of the sample S sequentially, with the stage 1 controlled at a constant speed, the first imaging device 18 may be a device which is capable of capturing a two-dimensional image such as a CMOS sensor or a CCD sensor. First images picked up by the first imaging device 18 are sequentially stored in a temporary storage memory such as a lane buffer, thereafter, compressed and output at an image producing portion 38 to be described later.

On the other hand, on the second optical path L2, there are disposed a view-field adjusting lens 19 which contracts an optical image of a sample reflected by the beam splitter 16 (second optical image) and a second imaging device (second imaging unit) 20. Further, at a front stage of the second imaging device 20, there is disposed an optical path difference producing member 21 which gives an optical path difference to the second optical image. It is preferable that the view-field adjusting lens 19 is constituted in such a manner that the second optical image is formed at the second imaging device 20 in a dimension similar to that of the first optical image.

The second imaging device 20 is a device which is capable of capturing a two-dimensional image (second image) by the second optical image of the sample S and is configured so as to be movable by an arbitrary distance in both directions along the optical-axis direction of the second optical path L2. The second imaging device 20 to be used is, for example, a sensor such as a CMOS (complementary metal oxide semiconductor) or a CCD (charge coupled device). Furthermore, a line sensor may be used.

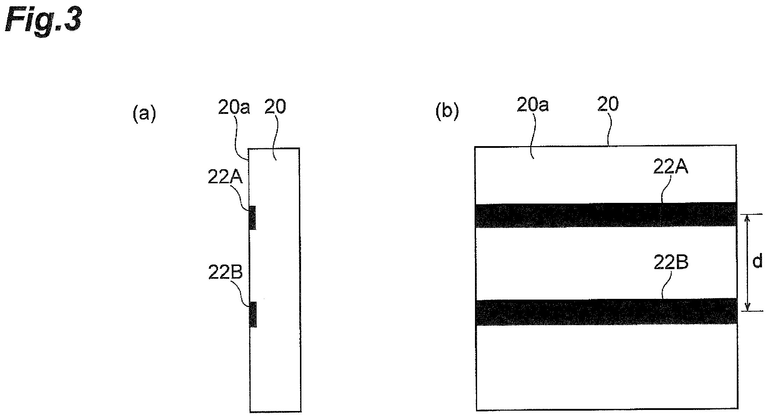

An imaging area 20a of the second imaging device 20 is disposed so as to be substantially in alignment with an XZ plane orthogonal to the second optical path L2. As shown in Fig. 3, a first imaging region 22A and a second imaging region 22B which capture a partial image of the second optical image are set on the imaging area 20a. The first imaging region 22A and the second imaging region 22B are set in a direction perpendicular to a direction (scanning direction: Z direction) at which the second optical image moves on the imaging area 20a in association with scanning of the sample S. The first imaging region 22A and the second imaging region 22B are set, with a predetermined interval kept, and both of them capture a part of the second optical image in a line shape. Thereby, an optical image at the same region as that of the first optical image of the sample S captured by the first imaging device 18 can be captured as the second optical image at the first imaging region 22A and the second imaging region 22B. It is acceptable that each of the first imaging region 22A and the second imaging region 22B is set by using a separate line sensor. In this case, each of the line sensors is controlled separately, thus making it possible to shorten the time necessary for setting the first imaging region 22A and the second imaging region 22B.

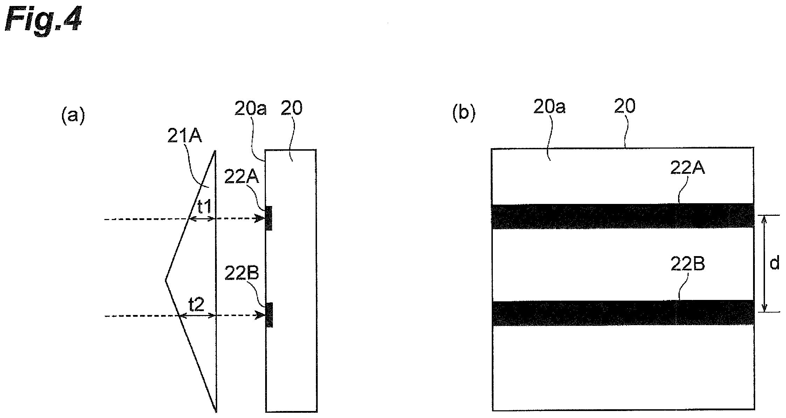

The optical path difference producing member 21 is a glass member which gives an optical path difference to the second optical image along an in-plane direction of the imaging area 20a. In an example shown in Fig. 4, the optical path difference producing member 21A is formed in the shape of a prism having a triangular cross section and disposed in such a manner that an apex thereof is substantially in alignment with a central part of the imaging area 20a in the Z direction. Therefore, the second optical image which is made incident into the imaging area 20a is longest in optical path at the central part of the imaging area 20a in the Z direction and becomes shorter in optical path when moving toward both ends of the imaging area 20a in the Z direction. Further, it is preferable that the optical path difference producing member 21 is disposed in such a manner that a face which faces to the second imaging device 20 is parallel with the imaging area (light receiving face) 20a of the second imaging device. Thereby, it is possible to reduce deflection of light by the face which faces to the second imaging device 20 and also to secure the amount of light which is received by the second imaging device 20.

Accordingly, the second imaging device 20 is able to capture an optical image which is focused at the front of a first optical image made incident into the first imaging device 18 (front focus) and an optical image which is focused at the rear thereof (rear focus) based on a position of the first imaging region 22A and that of the second imaging region 22B. In the present embodiment, the position of the first imaging region 22A and that of the second imaging region 22B are set in such a manner that, for example, the first imaging region 22A is given as the front focus and the second imaging region 22B is given as the rear focus. A focus difference between the front focus and the rear focus is dependent on a difference between a thickness $t1$ and an index of refraction of the optical path difference producing member 21A through which the second optical image made incident into the first imaging region 22A passes, and a thickness $t2$ and an index of refraction of the optical path difference producing member 21A through which the second optical image made incident into the second imaging region 22B passes.

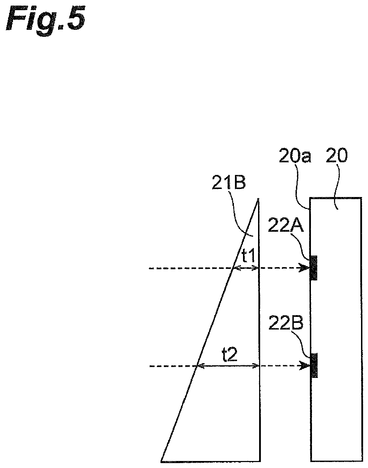

The optical-path-difference producing member 21B of the prism shape of a right triangle cross section as shown in Fig. 5 may be used as the optical-path-difference producing member 21 while it is arranged so that the thickness continuously increases along the in-plane direction (Z-direction) of the imaging area 20a.

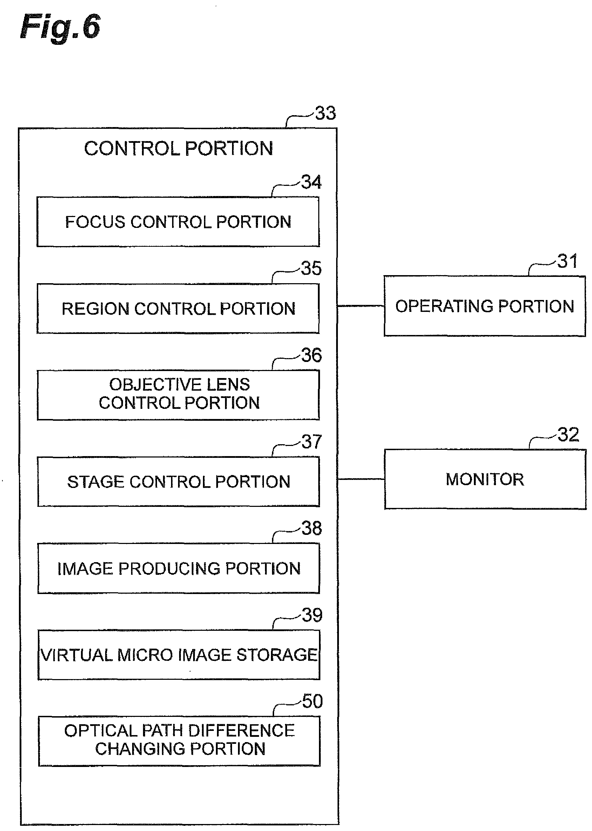

Fig. 6 is a block diagram which shows functional components of the image capturing apparatus. As shown in the diagram, the image capturing apparatus M is provided with a computer system having a CPU, a memory, a communication interface, a storage such as a hard disk, an operation portion 31 such as a keyboard, a monitor 32 etc. The functional components of the control portion 33 include a focus control portion 34, a region control portion 35, an objective lens control portion 36, a stage control portion 37, an image producing portion 38, a virtual micro image storage 39, and an optical-path-difference changing portion 50.

The focus control portion 34 is a portion which analyzes a second image captured by the second imaging device 20 so as to control a focus position of an image picked up by the first imaging device 18 based on the analysis result. More specifically, the focus control portion 34 first determines a difference between a contrast value of the image obtained at the first imaging region 22A and a contrast value obtained at the second imaging region 22B in the second imaging device 20.

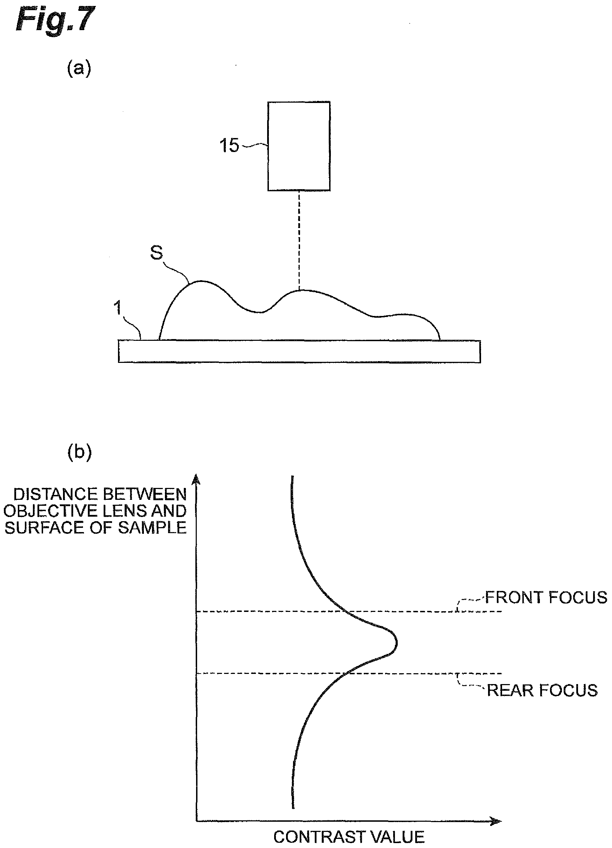

Here, as shown in Fig. 7, where a focus position of the objective lens 15 is in alignment with the surface of the sample S, an image contrast value of the front focus obtained at the first imaging region 22A is substantially in agreement with an image contrast value of the rear focus obtained at the second imaging region 22B. Thereby, a difference value between them is almost zero.

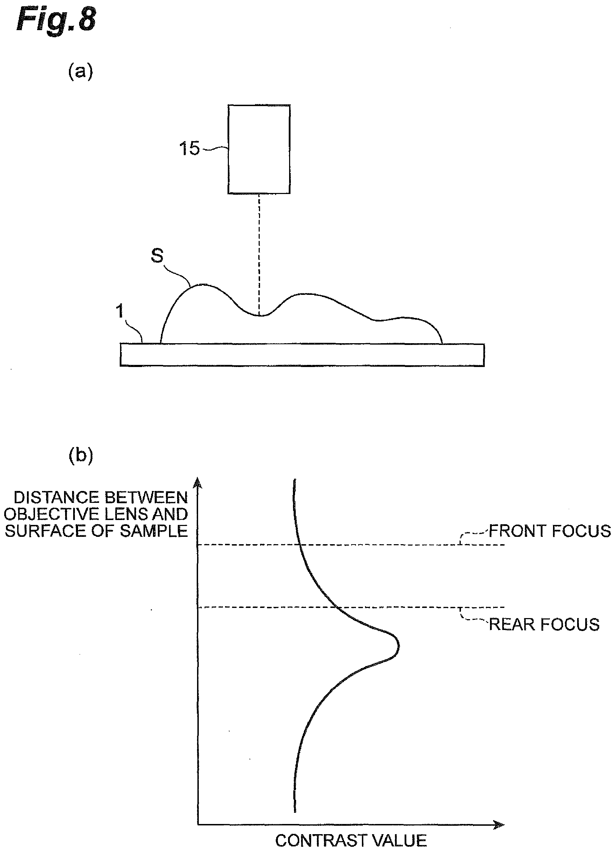

On the other hand, as shown in Fig. 8, where a distance to the surface of the sample S is longer than a focal length of the objective lens 15, an image contrast value of the rear focus obtained at the second imaging region 22B is greater than an image contrast value of the front focus obtained at the first imaging region 22A. Therefore, a difference value between them is a positive value. In this case, the focus control portion 34 outputs instruction information to the objective lens control portion 36 so as to be actuated in a direction at which the objective lens 15 is brought closer to the sample S.

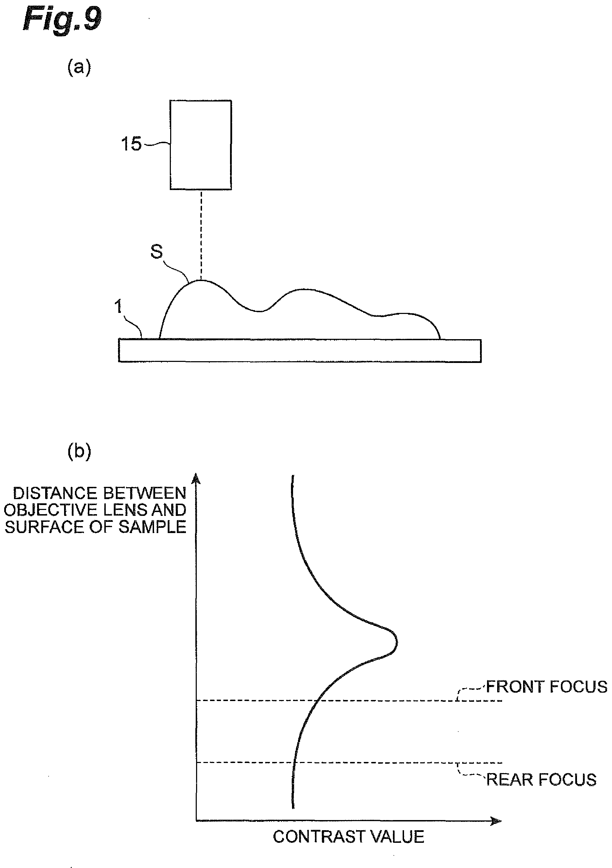

Further, as shown in Fig. 9, where a distance to the surface of the samples is shorter than a focal length of the objective lens 15, an image contrast value of the rear focus obtained at the second imaging region 22B is smaller than an image contrast value of the front focus obtained at the first imaging region 22A. Therefore, a difference value between them is a negative value. In this case, the focus control portion 34 outputs instruction information to the objective lens control portion 36 so as to be actuated in a direction at which the objective lens 15 is brought away from the sample S.

The region control portion 35 is a portion which controls a position of the first imaging region 22A and a position of the second imaging region 22B at the imaging area 20a of the second imaging device 20. The region control portion 35 sets at first the first imaging region 22A at a predetermined position based on operation from the operation portion 31 and releases the setting of the first imaging region 22A after image pickup at the first imaging region 22A. Then, the region control portion 35 sets the second imaging region 22B, with a predetermined interval kept in the Z direction (scanning direction) from the first imaging region 22A, and releases the setting of the second imaging region 22B after image pickup at the second imaging region 22B.

At this time, waiting time W from image pickup at the first imaging region 22A to image pickup at the second imaging region 22B is set based on an interval d between the first imaging region 22A and the second imaging region 22B, and a scanning velocity v of the stage 1. For example, where the waiting time W is given as time W1 from the start of image pickup at the first imaging region 22A to the start of image pickup at the second imaging region 22B, it is possible to determine the waiting time with reference to a formula of $W1 = d/v - el - st$, with consideration given to exposure time el of image pickup at the first imaging region 22A and time st from release of the setting of the first imaging region 22A to the setting of the second imaging region 22B.

Further, where the waiting time W is given as waiting time W2 from the start of image pickup at the first imaging region 22A to completion of image pickup at the second imaging region 22B, it is possible to determine the waiting time with reference to a formula of $W2 = d/v - st$, with consideration given to time st from release of the setting of the first imaging region 22A to setting of the second imaging region 22B. Still further, an interval d between the first imaging region 22A and the second imaging region 22B is set based on a difference in optical path length made by the optical path difference producing member 21. However, the interval d actually corresponds to a distance of the sample S on a slide. Eventually, it is necessary to convert the interval d to the number of pixels at the second imaging region 22B. Where a pixel size of the second imaging device 20 is expressed in terms of AFpsz and magnification is expressed in terms of AFmag, the number of pixels dpix corresponding to the interval d can be determined with reference to a formula of $dpix = d \div (AFpsz/AFmag)$.

Further, the region control portion 35 is able to change at least one of a position of the first imaging region 22A and that of the second imaging region 22B along an in-plane scanning direction (here, the Z direction) of the imaging area 20a based on operation from the operation portion 31. In this case, it is acceptable to change only one of the position of the first imaging region 22A and that of the second imaging region 22B or both of the position of the first imaging region 22A and that of the second imaging region 22B. It is also acceptable to change both of the position of the first imaging region 22A and that of the second imaging region 22B, with the interval d between the first imaging region 22A and the second imaging region 22B being kept.

The first imaging region 22A and the second imaging region 22B are changed in position, by which, for example, use of a prism-like optical path difference producing member 21 (21A or 21B) as shown in Fig. 4 or Fig. 5 makes it possible to change the thickness t1 of the optical path difference producing member 21A through which the second optical image made incident into the first imaging region 22A passes and the thickness t2 of the optical path difference producing member 21A through which the second optical image made incident into the second imaging region 22B passes. Thereby, an interval between the front focus and the rear focus is changed, thus making it possible to adjust resolution on determination of a difference in contrast value.

The objective lens control portion 36 is a portion which controls actuation of the objective lens 15. Upon receiving instruction information output from the focus control portion 34, the objective lens control portion 36 actuates the objective lens 15 in the Z direction in accordance with contents of the instruction information. It is, thereby, possible to adjust a focus position of the objective lens 15 with respect to the sample S.

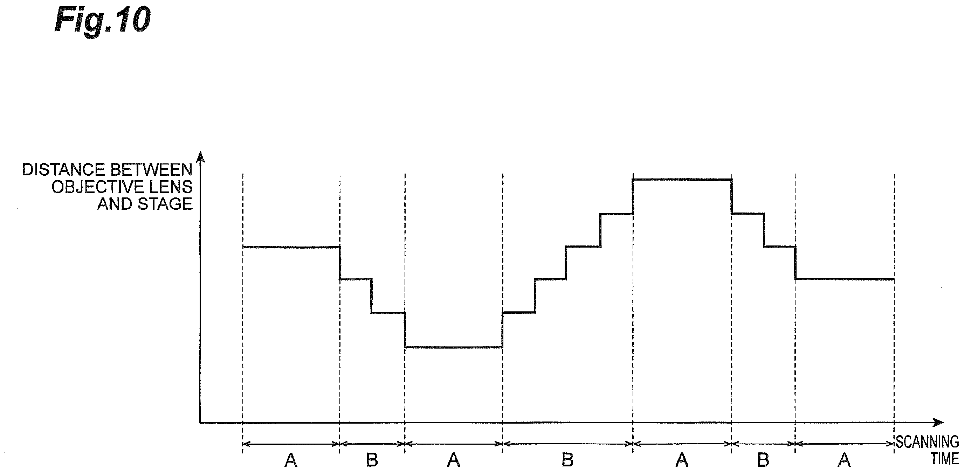

The objective lens control portion 36 does not actuate the objective lens 15 during analysis of the focus position which is being performed by the focus control portion 34 and actuates the objective lens 15 only in one direction along the Z direction until the next analysis of focus position is initiated. Fig. 10 is a drawing which shows a relationship of the distance between the objective lens and the stage with respect to scanning time of the stage. As shown in the drawing, during scanning of the sample S, an analysis period A of the focus position and an objective lens actuation period B based on an analysis result thereof are taken place alternately. By keeping the positional relationship between the objective lens 15 and the sample S unchanged during the analysis of focus position in this manner, analysis accuracy of focus position can be guaranteed.

The stage control portion 37 is a portion which controls actuation of the stage 1. More specifically, the stage control portion 37 allows the stage 1 on which the sample S is placed to scan at a predetermined speed based on operation from the operation portion 31. By the scanning of the stage 1, an imaging field of the sample S moves relatively and sequentially at the first imaging device 18 and the second imaging device 20. The scanning direction of the stage 1 may be determined to be one-directional scanning, as shown in (a) of Fig. 11, which is carried out in such a manner that the position of the stage 1 is returned to a scan start position every completion of scanning of one segmented region 40 and the next segmented region 40 is then scanned in the same direction, or may be determined to be bidirectional scanning, as shown in (b) of Fig. 11, which is carried out in such a manner that, after completion of scanning of one segmented region 40, the stage 1 is moved in a direction perpendicular to the scanning direction and the next segmented region 40 is then scanned in the opposite direction.

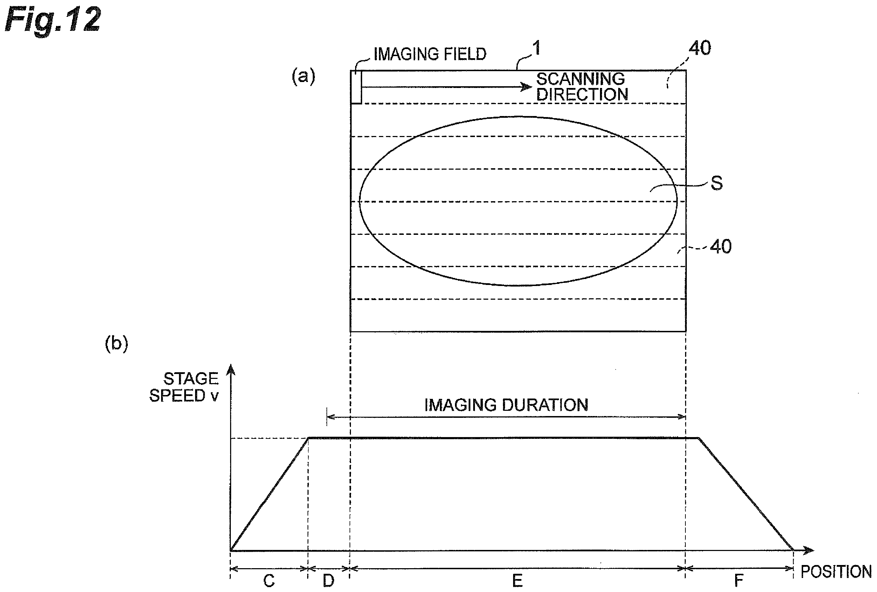

Although the stage 1 is scanned at a constant speed while images are captured, actually, immediately after the start of scanning, there is a period during which the scanning speed is unstable due to influences of vibrations of the stage 1 etc. For this reason, it is preferable, as shown in Fig. 12, to set a scanning width longer than the segmented regions 40 and make each of an acceleration period C for the stage 1 to accelerate, a stabilization period D for the scanning speed of the stage 1 to stabilize, and a deceleration period F for the stage 1 to decelerate, occur during scanning outside the segmented regions 40. This allows capturing of images to be carried out in accord with a constant speed period E where the scanning speed of the stage 1 is constant. It is also possible to adopt a technique of starting imaging in the stabilization period D and deleting data part obtained in the stabilization period D after the image has been captured. Such a technique can be suitably applied to cases using an imaging device which requires void reading of data.

The image producing portion 38 is a portion at which an captured image is synthesized to produce a virtual micro image. The image producing portion 38 receives sequentially first images output from the first imaging device 18, that is, images of individual divided regions 40, synthesizing these images to produce an entire image of the sample S. Then, based on the synthesized image, prepared is an image, the resolution of which is lower than that of the synthesized image, and housed in a virtual micro image storage 39 by associating a high resolution image with a low resolution image. It is acceptable that an image captured by the macro image capturing device M1 is also associated with them in the virtual micro image storage 39. The virtual micro image may be stored as a single image or may be stored as a plurality of divided images.

The optical-path-difference changing portion 50 is a portion which changes the optical path difference between the first optical path L1 and the second optical path L2. The optical-path-difference changing portion 50 has a function to drive the first imaging device 18 by an arbitrary distance in both directions along the optical-axis direction of the first optical path L1. Furthermore, the optical-path-difference changing portion 50 has a function to drive the second imaging device 20 by an arbitrary distance in both directions along the optical-axis direction of the second optical path L2. In addition, the optical-path-difference changing portion 50 has a function to output instruction information to change the set positions of the first imaging region 22A and the second imaging region 22B in the imaging area 20a of the imaging device 20 of the second imaging device 20, to the region control portion 35. Namely, the optical-path-difference changing portion 50 has the function to change the position of the first imaging region 22A and the set position of the second imaging region 22B, through the region control portion 35.

The optical-path-difference changing portion 50 uses the above-described functions to change the position of the first imaging device 18, the position of the second imaging device 20, or, the set positions of the first imaging region 22A and the second imaging region 22B, thereby changing the optical path difference between the first optical path L1 and the second optical path L2. When an optical path difference changing process by the optical-path-difference changing portion 50 is performed based on a predetermined target focus interval dz, it becomes feasible for the first imaging device 18 to capture the first images in focus around positions shifted by the target focus interval dz in the depth direction of the sample S. Namely, the image capturing apparatus M becomes able to capture Z-stack images consisting of a plurality of first images in the depth direction (the Z-direction) of the sample S. A specific method for it will be described below.

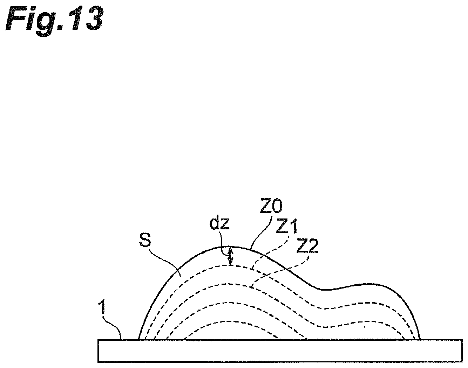

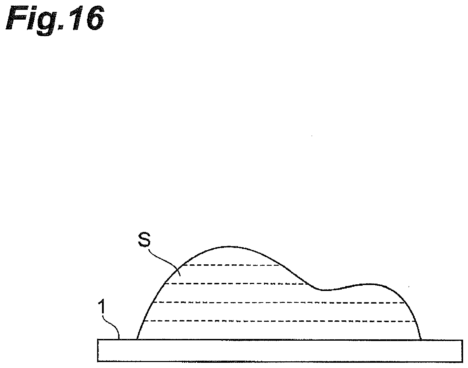

Fig. 13 is a drawing used for explaining the Z-stack images captured by the image capturing apparatus M, showing a cross-sectional shape of the sample S and stage 1 cut along a plane (XZ plane) parallel to both of the scanning direction of the stage 1 (X-direction) and the depth direction of the sample S (Z-direction). In the same drawing, line Z0 indicated by a curve represents a line along the surface shape (relief) of the sample S. Furthermore, lines Z1 and Z2 represent lines resulting from movement of the line Z0 by the predetermined target focus interval dz each in the Z-direction. In the image capturing apparatus M, as described above, while the focus control portion 34 controls the focus position of the image pickup by the first imaging device 18, the stage control portion 37 scans the stage 1 (i.e., performs the dynamic focus). Therefore, the image capturing apparatus M captures the Z-stack images consisting of images of sections along curved surfaces (e.g., lines Z0, Z1, Z2, and so on) approximately similar to the surface shape (relief) of the sample S, different from the images of sections of the sample by XY planes parallel to the stage plane (cf. Fig. 16). In this manner, the image capturing apparatus M can capture the images in focus at respective layers. As described above, the dynamic focus is carried out with focus at respective layers inside the sample S, whereby the Z-stack images can be captured in focus with cells inside the sample S. When compared to the Z-stack images captured by the conventional image capturing apparatus, more information can be obtained about the sample S in the depth direction by a smaller number of images (e.g., three layers of the lines Z0, Z1, and Z2).

In the description hereinbelow, for simplicity of description, let us define an initial state as a state in which each of the devices is arranged so that a locus of focus positions (hereinafter referred to as "focus locus") of the first image captured by the operation in which the stage control portion 37 scans the stage 1 while the focus control portion 34 controls the focus position of the image pickup by the first imaging device 18, follows the line Z0. Then, let us explain the optical-path-difference changing process carried out by the optical-path-difference changing portion 50 for the first imaging device 18 to capture the first image in focus around the positions indicated by the line Z1 resulting from parallel movement of the line Z0 by the target focus interval dz in the depth direction of the sample S.

(First Example)

The optical-path-difference changing portion 50 moves the optical-path-difference producing member 21 and the second imaging device 20 by a moving distance calculated according to Formula (1) below, along the optical-axis direction of the second optical path L2, from the initial state. For example, in a case where the Z-stack images are captured in the opposite direction (arrow A in Fig. 2) to the traveling direction of light along the optical axis, the optical-path-difference producing member 21 and the second imaging device 20 are moved in the opposite direction (arrow B in Fig. 2) to the traveling direction of light along the optical axis. In a case where the Z-stack images are captured in the traveling direction of light along the optical axis (the opposite direction to the arrow A), the optical-path-difference producing member 21 and the second imaging device 20 are moved in the traveling direction of light along the optical axis (the opposite direction to the arrow B). Therefore, the relationship of the moving direction of the optical-path-difference producing member 21 and second imaging device 20 with the capturing direction of the Z-stack with respect to the traveling direction of light along the optical axis is the same direction.

$$\text{Moving distance} = \text{the target focus interval dz} \times (\text{the square of an optical magnification in the second optical path L2}) \qquad (1)$$

Here, the optical magnification in the second optical path L2 is determined by the product of magnifications of the objective lens 15 and the view-field adjustment lens 19 via which the light emitted from the light source 12 travels up to the second imaging device 20 through the second optical path L2 while being reflected by the beam splitter 16.

(Second Example)

The optical-path-difference changing portion 50 moves the first imaging device 18 by a moving distance calculated according to Formula (2) below, along the optical-axis direction of the first optical path L1, from the initial state. For example, in a case where the Z-stack images are captured in the opposite direction (arrow A) to the traveling direction of light along the optical axis, the first imaging device 18 is moved in the opposite direction (arrow C in Fig. 2) to the traveling direction of light along the optical axis. In a case where the Z-stack images are captured in the traveling direction of light along the optical axis (the opposite direction to the arrow A), the first imaging device 18 is moved in the traveling direction of light along the optical axis (the opposite direction to the arrow C). Therefore, the relationship of the moving direction of the first imaging device 18 with the capturing direction of the Z-stack with respect to the traveling direction of light along the optical axis is the same direction.

$$\text{Moving distance} = \text{the target focus interval dz} \times (\text{the square of an optical magnification in the first optical path L1}) \qquad (2)$$

Here, the optical magnification in the first optical path L1 is determined by the product of magnifications of the objective lens 15 and the image forming lens 17 via which the light emitted from the light source 12 travels up to the first imaging device 18 through the first optical path L1 while passing though the beam splitter 16.

(Third Example)

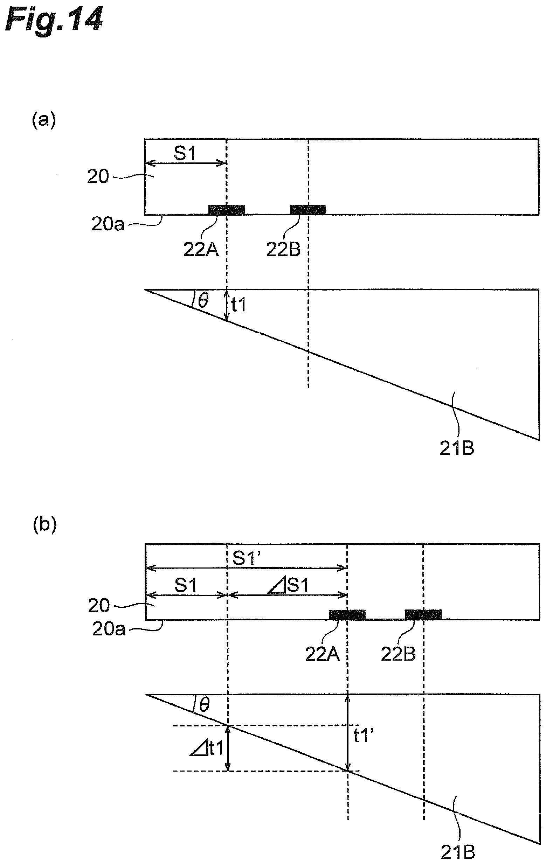

The optical-path-difference producing member 21 to be used is a member having a portion whose thickness continuously varies along the in-plane direction of the imaging area 20a. Furthermore, the optical-path-difference changing portion 50 changes, through the region control portion 35, the set positions of the first imaging region 22A and the second imaging region 22B, based on a rate of change in thickness of the optical-path-difference producing member 21 in the in-plane direction of the imaging area 20a and the target focus interval dz, from the initial state. For example, a case using the optical-path-difference producing member 21B shown in Fig. 5, as the optical-path-difference producing member 21 will be specifically described using Fig. 14.

(a) of Fig. 14 is a drawing showing the set positions of the first imaging region 22A and the second imaging region 22B in the initial state. Distance S1 indicates a distance from one end of the second imaging device 20 (the end on the side where the thickness of the optical-path-difference producing member 21B opposed to the imaging area 20a is small) to the central position of the first imaging region 22A, in the in-plane direction of the imaging area 20a. Angle θ indicates an angle (acute angle) between the plane opposed to the imaging area 20a of the second imaging device 20 and the inclined plane, in the optical-path-difference producing member 21B. Here, the angle θ acts as a parameter indicating the rate of change in thickness of the optical-path-difference producing member 21 in the in-plane direction of the imaging area 20a.

(b) of Fig. 14 is a drawing showing a state after each of the set positions of the first imaging region 22A and the second imaging region 22B is changed to a position distant by a change distance ΔS1 along the in-plane direction (the same direction as the arrow A and arrow C) of the imaging area 20a, from the initial state. Distance S1' indicates a distance from the one end of the second imaging device 20 to the central position of the first imaging region 22A after the change, in the in-plane direction of the imaging area 20a. The distance S1' is represented by the sum of the distance S1 and the change distance ΔS1 (S1' = S1 + ΔS1). Furthermore, thickness t1' indicates the thickness of the optical-path-difference producing member 21B where the second optical image to enter the first imaging region 22A after the change passes. Thickness difference Δt1 is represented by a difference between the thickness t1' after the change and the thickness t1 before the change (Δt1 = t1' - t1).

Here, the change distance ΔS1 of the set positions of the first imaging region 22A and the second imaging region 22B is calculated according to Formula (3) below, where an index of refraction of the optical-path-difference producing member 21B is defined as the index of refraction n.

$$\Delta S1 = A/B \qquad (3)$$

$$A = \text{the target focus interval } dz \times (\text{the square of the optical magnification in the second optical path L2})$$

$$B = (1 - 1/n) \times \tan\theta$$

After the optical-path-difference changing portion 50 changes the optical path difference between the first optical path L1 and the second optical path L2 by any one method described in the foregoing first example to third example, the stage control portion 37 scans the stage 1 while the focus control portion 34 controls the focus position of the image pickup by the first imaging device 18, whereby the focus locus comes to follow the line Z1 shifted by the target focus interval dz in the depth direction of the sample S from the line Z0. This allows the first imaging device 18 to capture the first image in focus around the positions indicated by the line Z1 shifted by the target focus interval dz in the depth direction of the sample S.

Therefore, as the focus control by the focus control portion 34, the stage scanning by the stage control portion 37, and the capturing of the first images by the first imaging device 18 are carried out every change of the optical path difference between the first optical path L1 and the second optical path L2 by any of the methods described in the above examples, the apparatus can capture the first images in focus at the respective layers of the sample S (e.g., the line Z0, line Z1, line Z2, and so on). The optical-path-difference changing portion 50 for changing the optical path difference between the first optical path L1 and the second optical path L2 does not have to be limited to those in the first to third examples, but we may adopt a configuration wherein an optical member capable of changing the optical path length, such as a liquid crystal lens, is arranged in the optical path and the optical member is controlled, or other configurations.

Formulae (1) to (3) described in the above respective examples are theoretical formulae, and the optical magnification in the first optical path L1, the optical magnification in the second optical path L2, and others can be slightly different depending upon the actual device configuration. Therefore, measurement with some samples may be carried out to acquire correction values and calibration may be performed based on the correction values.

The operation of the image capturing apparatus M described above will be described below.

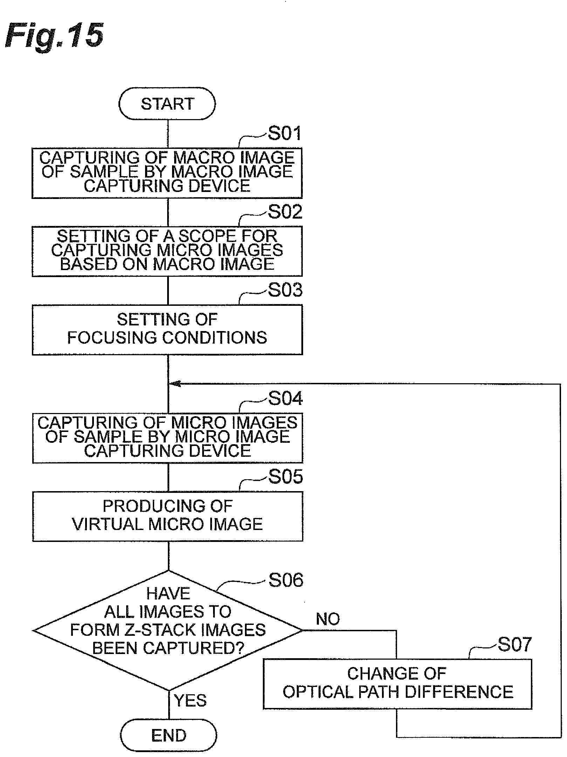

Fig. 15 is a flow chart which shows an operation of the image capturing apparatus M. As shown in the flow chart, at the image capturing apparatus M, at first, a macro image of the sample S is captured by the macro image capturing device M1 (Step S01). The captured macro image is binarized by using, for example, a predetermined threshold value and, thereafter, displayed on a monitor 32. A scope for capturing micro images from macro images is set by automatic setting based on a predetermined program or manual setting by an operator (Step S02).

Then, the sample S is transferred to the micro image capturing device M2 and focusing conditions are set (Step S03). Here, as described above, a waiting time W before a start of image pickup at the second imaging region 22B is set based on a scanning velocity v of the stage 1 and an interval d between the first imaging region 22A and the second imaging region 22B. It is more preferable that consideration is given to exposure time el of image pickup at the first imaging region 22A, time st from release of setting of the first imaging region 22A to setting of the second imaging region 22B etc.

After the focusing conditions have been set, scanning of the stage 1 is started to capture a micro image for each of the divided regions 40 of the sample S by the micro image capturing device M2 (Step S04). In capturing the micro image by the first imaging device 18, at the second imaging device 20, a deviating direction of the objective lens 15 with respect to the sample S is analyzed based on a difference in contrast value between the front focus and the rear focus by the first imaging region 22A and the second imaging region 22B, thereby adjusting a position of the objective lens 15 in real time. After micro images have been captured completely for all the divided regions 40, the captured micro images are synthesized to produce a virtual micro image (Step S05). The processes of steps S04 and S05 result in capturing the virtual micro image at one layer forming the Z-stack images (e.g., an image in focus around the positions indicated by the line Z0 shown in Fig. 13).

Subsequently, it is determined whether all the images forming the Z-stack images (virtual micro images) have been captured (step S06). Here, all the images forming the Z-stack images refer to, for example, images at all the depth positions of the sample S with the predetermined target focus interval dz, which was set in advance, in between. Unless all the images forming the desired Z-stack images have been captured (step S06: NO), the optical path difference between the first optical path L1 and the second optical path L2 is changed by any one of the aforementioned methods (or by a combination thereof), based on the predetermined target focus interval dz (step S07). Thereafter, the processes of steps S04 and S05 are again carried out to capture an image in focus at different depth positions of the sample S (e.g., the image in focus around the positions indicated by the line Z1 shown in Fig. 13). After all the images forming the Z-stack images have been captured, the processing is terminated (step S06: YES).

As described above, the image capturing apparatus M has the optical-path-difference changing portion 50 for changing the optical path difference between the first optical path L1 and the second optical path L2. The focus position of the image pickup by the first imaging device 18 varies (or moves) in the depth direction of the sample S according to the optical path difference changed by the optical-path-difference changing portion 50. Therefore, every time the optical-path-difference changing portion 34 changes the optical path difference based on the predetermined target focus interval dz, while the focus control portion 34 controls the focus position of the image pickup by the first imaging device 18, the stage control portion 37 scans the stage 1 and the first imaging device 18 captures the first image, whereby the apparatus can readily capture the Z-stack images consisting of the first images in the depth direction of the sample S according to the change of the optical path difference.

Specifically, the optical-path-difference changing portion 50 moves the second imaging device 20 by the moving distance calculated by the aforementioned Formula (1) including the target focus interval dz as a parameter, along the optical-axis direction of the second optical path L2, so as to change the optical path difference between the first optical path L1 and the second optical path L2, whereby the first images can be captured at a plurality of focus positions with the target focus interval dz in between.

The optical-path-difference changing portion 50 moves the first imaging device 18 by the moving distance calculated by the foregoing Formula (2) including the target focus interval dz as a parameter, along the optical-axis direction of the first optical path L1, so as to change the optical path difference between the first optical path L1 and the second optical path L2 as well, whereby the first images can also be captured at a plurality of focus positions with the target focus interval dz in between.

When the optical-path-difference producing member 21 to be used is the optical-path-difference producing member 21 having the portion whose thickness continuously varies along the in-plane direction of the imaging area 20a, and configured to give the optical path difference to the second optical image along the in-plane direction of the imaging area 20a (e.g., the optical-path-difference producing member 21B), the optical-path-difference changing portion 50 changes the set positions of the first imaging region 22A and the second imaging region 22B by the change distance determined based on the rate of the change of the thickness in the in-plane direction of the imaging area 20a and the target focus interval dz, so as to change the optical path difference between the first opt L1 and the second optical path L2 as well, whereby the first images can also be captured at a plurality of focus positions with the target focus interval dz in between.

The above-described embodiment showed the apparatus for producing the virtual micro images by way of illustration, but it should be noted that the image capturing apparatus according to the present invention can be applied to a variety of devices as long as they are apparatuses for capturing images while scanning the sample at a predetermined speed by the stage or the like.

**Reference Signs List**

1 stage; 12 light source; 14 light guiding optical system; 15 objective lens; 16 beam splitter (light dividing unit); 18 first imaging device (first imaging unit); 20 second imaging device (second imaging unit); 20a imaging area; 21 (21A, 21B) optical-path-difference producing member; 22A first imaging region; 22B second imaging region; 34 focus control portion (focus control unit); 35 region control portion (region control unit); 37 stage control portion (stage control unit); 50 optical-path-difference changing portion (optical-path-difference changing unit); L1 first optical path; L2 second optical path; M image capturing apparatus; M1 macro image capturing device; M2 micro image capturing device; S sample.

**Claims**

1.  An image capturing apparatus (M) comprising:

    a stage (1) for supporting a sample (S);
    a stage control unit (37) for moving the stage (1) at a predetermined speed;
    a light source (12) for outputting light;
    a light guiding optical system (14) including a light dividing unit (16) for dividing an optical image of the sample (S) into a first image for capturing an image and a second image for focus control;
    a first imaging unit (18) for capturing the first image;
    a second imaging unit (20) for capturing the second image;
    a focus control unit (34) for analyzing the second image so as to control a focus position of the image pickup by the first imaging unit (18) based on the analysis result; and
    an optical-path-difference changing unit (50) for changing an optical path difference between the first image and the second image based on a predetermined target focus interval for capturing Z-stack images consisting of the first images at different layers in a depth direction of the sample (S),
    wherein the focus control unit (34) is configured to control the focus position and the first imaging unit (18) is configured to capture the first image during the movement of the stage (1) by the stage control unit (37) every time the optical path difference is changed by the optical-path-difference changing unit (50).

2.  The image capturing apparatus (M) according to claim 1, wherein the optical-path-difference changing unit (50) is configured to move the second imaging unit (20) along an optical-axis direction of a second optical path (L2) for capturing the second image based on a moving distance calculated by Formula (1) below.

$$\texttt{Moving distance = the target focus interval} \times \texttt{(a square}$$
$$\texttt{of an optical magnification in the second optical path) (1)}$$

3.  The image capturing apparatus (M) according to claim 1 or 2, wherein the optical-path-difference changing unit (50) is configured to move the first imaging unit (18) along an optical-axis direction of a first optical path (L1) for capturing the first image based on a moving distance calculated by Formula (2) below.

$$\texttt{Moving distance = the target focus interval} \times \texttt{(a square}$$
$$\texttt{of an optical magnification in the first optical path}$$
$$\texttt{(2)}$$

4.  The image capturing apparatus (M) according to any one of claims 1 to 3, further comprising:

    region control unit (35) for setting at an imaging area (20a) of the second imaging unit (20) a first imaging region (22A) and a second imaging region (22B) for capturing a partial image of the second optical image; and
    an optical-path-difference producing member (21) which is disposed on the second optical path (L2), having a portion whose thickness continuously varies along an in-plane direction of the imaging area (20a), and for giving an optical path difference to the second optical image along the in-plane direction of the imaging area (20a),
    wherein the optical-path-difference changing unit (50) is configured to make the region control unit (35) change set positions of the first imaging region (22A) and the second imaging region (22B) based on a rate of variation of the thickness in the in-plane direction of the imaging area (20a) and the target focus interval.

5. An image capturing method comprising:

moving a stage (1) on which a sample (S) is placed at a predetermined speed;
dividing an optical image of the sample (S) into a first image and a second image;
capturing the first image by a first imaging unit (18);
capturing the second image by a second imaging unit (20) ;
analyzing the captured second image so as to control a focus position of the image pickup by the first imaging unit (18) based on the analysis result; and
changing an optical path difference between the first image and the second image based on a predetermined target focus interval by an optical-path-difference changing unit (50) for capturing Z-stack images consisting of the first images at different layers in a depth direction of the sample (S),
wherein controlling the focus position by the focus control unit (34) and capturing the first image by the first imaging unit (18) during moving the stage (1) by the stage control unit (37) every time the optical path difference is changed by the optical-path-difference changing unit (50).

6. The image capturing method according to claim 5, wherein the method comprises moving the second imaging unit (20) along an optical-axis direction of a second optical path (L2) for capturing the second image by the optical-path-difference changing unit (50) based on a moving distance calculated by Formula (1) below.

$$\text{Moving distance} = \text{the target focus interval} \times (\text{a square of an optical magnification in the second optical path}) \quad (1)$$

7. The image capturing method according to claim 5 or 6, wherein the method comprises moving the first imaging unit (18) along an optical-axis direction of a first optical path (L1) for capturing the first image by the optical-path-difference changing unit (50) based on a moving distance calculated by Formula (2) below.

$$\text{Moving distance} = \text{the target focus interval} \times (\text{a square of an optical magnification in the first optical path}) \quad (2)$$

8. The image capturing method according to any one of claims 5 to 7, further comprising:

setting at an imaging area (20a) of the second imaging unit (20) a first imaging region (22A) and a second imaging region (22B) for capturing a partial image of the second image;
by an optical-path-difference producing member (21) which is disposed on the second optical path (L2), having a portion whose thickness continuously varies along an in-plane direction of the imaging area (20a), giving an optical path difference to the second optical image along the in-plane direction of the imaging area (20a), and
changing set positions of the first imaging region (22A) and the second imaging region (22B) based on a rate of variation of the thickness in the in-plane direction of the imaging area (20a) and the target focus interval.

**Patentansprüche**

1. Bilderfassungsgerät (M), umfassend:

einen Tisch (1) zum Tragen einer Probe (S);
eine Tischsteuereinheit (37) zum Bewegen des Tisches (1) mit einer vorbestimmten Geschwindigkeit;
eine Lichtquelle (12) zum Ausgeben von Licht;
ein optisches Lichtführungssystem (14), das eine Lichttrenneinheit (16) zum Trennen eines optischen Bildes der Probe (S) in ein erstes Bild zum Erfassen eines Bildes und ein zweites Bild zur Fokussteuerung einschließt;
eine erste Bildgebungseinheit (18) zum Erfassen des ersten Bildes;

eine zweite Bildgebungseinheit (20) zum Erfassen des zweiten Bildes;

eine Fokussteuereinheit (34) zum Analysieren des zweiten Bildes, um eine Fokusposition der Bildaufnahme durch die erste Bildgebungseinheit (18) basierend auf dem Analyseergebnis zu steuern; und

eine Strahlengangunterschied-Änderungseinheit (50) zum Ändern eines Strahlengangunterschieds zwischen dem ersten Bild und dem zweiten Bild basierend auf einem vorbestimmten Zielfokusintervall zum Erfassen von Z-Stapel-Bildern, die aus den ersten Bildern an unterschiedlichen Schichten in einer Tiefenrichtung der Probe (S) bestehen,

wobei die Fokussteuereinheit (34) dazu konfiguriert ist, die Fokusposition zu steuern, und die erste Bildgebungseinheit (18) dazu konfiguriert ist, das erste Bild während der Bewegung des Tisches (1) durch die Tischsteuereinheit (37) jedes Mal, wenn der Strahlengangunterschied durch die Strahlengangunterschied-Änderungseinheit (50) geändert wird, zu erfassen.

2. Bilderfassungsgerät (M) nach Anspruch 1, wobei die Strahlengangunterschied-Änderungseinheit (50) dazu konfiguriert ist, die zweite Bildgebungseinheit (20) zum Erfassen des zweiten Bildes basierend auf einer durch eine Formel (1) unten berechneten Verfahrstrecke entlang einer Richtung einer optischen Achse eines zweiten Strahlengangs (L2) zu bewegen.

$$\text{Verfahrstrecke} = \text{das Zielfokusintervall} \times (\text{ein Quadrat einer optischen}$$

$$\text{Vergrößerung in dem zweiten Strahlengang})$$

$$(1)$$

3. Bilderfassungsgerät (M) nach Anspruch 1 oder 2, wobei die Strahlengangunterschied-Änderungseinheit (50) dazu konfiguriert ist, die erste Bildgebungseinheit (18) zum Erfassen des ersten Bildes basierend auf einer durch eine Formel (2) unten berechneten Verfahrstrecke entlang einer Richtung einer optischen Achse eines ersten Strahlengangs (L1) zu bewegen.

$$\text{Verfahrstrecke} = \text{das Zielfokusintervall} \times (\text{ein Quadrat einer optischen}$$

$$\text{Vergrößerung in dem ersten Strahlengang})$$

$$(2)$$

4. Bilderfassungsgerät (M) nach einem der Ansprüche 1 bis 3, weiter umfassend:

eine Zonensteuereinheit (35) zum Einstellen, an einem Bildgebungsbereich (20a) der zweiten Bildgebungseinheit (20), einer ersten Bildgebungszone (22A) und einer zweiten Bildgebungszone (22B) zum Erfassen eines Teilbildes des zweiten optischen Bildes; und

ein Strahlengangunterschied-Erzeugungselement (21), das auf dem zweiten Strahlengang (L2) angeordnet ist und einen Abschnitt aufweist, dessen Dicke entlang einer Richtung in einer Ebene des Bildgebungsbereichs (20a) kontinuierlich variiert, und zum Beaufschlagen des zweiten optischen Bildes mit einem Strahlengangunterschied entlang der Richtung in der Ebene des Bildgebungsbereichs (20a),

wobei die Strahlengangunterschied-Änderungseinheit (50) dazu konfiguriert ist, zu bewirken, dass die Zonensteuereinheit (35) eingestellte Positionen der ersten Bildgebungszone (22A) und der zweiten Bildgebungszone (22B) basierend auf einer Variationsrate der Dicke in der Richtung in der Ebene des Bildgebungsbereichs (20a) und dem Zielfokusintervall ändert.

5. Bilderfassungsverfahren, umfassend:

Bewegen eines Tisches (1), auf dem eine Probe (S) platziert ist, mit einer vorbestimmten Geschwindigkeit;

Trennen eines optischen Bildes der Probe (S) in ein erstes Bild und ein zweites Bild;

Erfassen des ersten Bildes durch eine erste Bildgebungseinheit (18);

Erfassen des zweiten Bildes durch eine zweite Bildgebungseinheit (20);

Analysieren des erfassten zweiten Bildes, um eine Fokusposition der Bildaufnahme durch die erste Bildgebungseinheit (18) basierend auf dem Analyseergebnis zu steuern; und

Ändern eines Strahlengangunterschieds zwischen dem ersten Bild und dem zweiten Bild basierend auf einem vorbestimmten Zielfokusintervall durch eine Strahlengangunterschied-Änderungseinheit (50) zum Erfassen von Z-Stapel-Bildern, die aus den ersten Bildern an unterschiedlichen Schichten in einer Tiefenrichtung der Probe (S) bestehen,
wobei das Steuern der Fokusposition durch die Fokussteuereinheit (34) und das Erfassen des ersten Bildes durch die erste Bildgebungseinheit (18) während eines Bewegens des Tisches (1) durch die Tischsteuereinheit (37) jedes Mal durchgeführt wird, wenn der Strahlengangunterschied durch die Strahlengangunterschied-Änderungseinheit (50) geändert wird.

6. Bilderfassungsverfahren nach Anspruch 5, wobei das Verfahren ein Bewegen der zweiten Bildgebungseinheit (20) entlang einer Richtung einer optischen Achse eines zweiten Strahlengangs (L2) zum Erfassen des zweiten Bildes durch die Strahlengangunterschied-Änderungseinheit (50) basierend auf einer Verfahrstrecke, die durch die Formel (1) unten berechnet wird, umfasst.

$$\text{Verfahrstrecke} = \text{das Zielfokusintervall} \times (\text{ein Quadrat einer optischen}$$

$$\text{Vergrößerung in dem zweiten Strahlengang})$$

$$(1)$$

7. Bilderfassungsverfahren nach Anspruch 5 oder 6, wobei das Verfahren ein Bewegen der ersten Bildgebungseinheit (18) entlang einer Richtung einer optischen Achse eines ersten Strahlengangs (L1) zum Erfassen des ersten Bildes durch die Strahlengangunterschied-Änderungseinheit (50) basierend auf einer Verfahrstrecke, die durch die Formel (2) unten berechnet wird, umfasst.

$$\text{Verfahrstrecke} = \text{das Zielfokusintervall} \times (\text{ein Quadrat einer optischen}$$

$$\text{Vergrößerung in dem ersten Strahlengang})$$

$$(2)$$

8. Bilderfassungsverfahren nach einem der Ansprüche 5 bis 7, weiter umfassend:

Einstellen, an einem Bildgebungsbereich (20a) der zweiten Bildgebungseinheit (20), einer ersten Bildgebungszone (22A) und einer zweiten Bildgebungszone (22B) zum Erfassen eines Teilbildes des zweiten Bildes;
durch ein Strahlengangunterschied-Erzeugungselement (21), das auf dem zweiten Strahlengang (L2) angeordnet ist und einen Abschnitt aufweist, dessen Dicke entlang einer Richtung in der Ebene des Bildgebungsbereichs (20a) kontinuierlich variiert, Beaufschlagen des zweiten optischen Bildes mit einem Strahlengangunterschied entlang der Richtung in der Ebene des Bildgebungsbereichs (20a), und
Ändern eingestellter Positionen der ersten Bildgebungszone (22A) und der zweiten Bildgebungszone (22B) basierend auf einer Variationsrate der Dicke in der Richtung in der Ebene des Bildgebungsbereichs (20a) und dem Zielfokusintervall.

**Revendications**

1. Appareil de capture d'image (M) comprenant :

un étage (1) pour supporter un échantillon (S) ;
une unité de commande d'étage (37) pour déplacer l'étage (1) à une vitesse prédéterminée ;
une source de lumière (12) pour produire de la lumière ;
un système optique de guidage de lumière (14) incluant une unité de division de lumière (16) pour diviser une image optique de l'échantillon (S) en une première image pour capturer une image et une seconde image pour la commande de mise au point ;
une première unité d'imagerie (18) pour capturer la première image ;
une seconde unité d'imagerie (20) pour capturer la seconde image ;
une unité de commande de mise au point (34) pour analyser la seconde image de manière à commander une position de mise au point du capteur d'image par la première unité d'imagerie (18) sur la base du résultat d'analyse ; et
une unité de modification de différence de trajet optique (50) pour modifier une différence de trajet optique entre la première image et la seconde image sur la base d'un intervalle de mise au point cible prédéterminé pour capturer des images d'empilement Z consistant en les premières images au niveau de différentes couches dans une direction de profondeur de l'échantillon (S),

dans lequel l'unité de commande de mise au point (34) est configurée pour commander la position de mise au point et la première unité d'imagerie (18) est configurée pour capturer la première image durant le mouvement de l'étage (1) par l'unité de commande d'étage (37) à chaque fois que la différence de trajet optique est modifiée par l'unité de modification de différence de trajet optique (50).

2.  Appareil de capture d'image (M) selon la revendication 1, dans lequel l'unité de modification de différence de trajet optique (50) est configurée pour déplacer la seconde unité d'imagerie (20) le long d'une direction d'axe optique d'un second trajet optique (L2) pour capturer la seconde image sur la base d'une distance de déplacement calculée par la Formule (1) ci-dessous :

distance de déplacement = l'intervalle de mise au point cible x (un carré d'un grossissement optique dans le second trajet optique) (1).

3.  Appareil de capture d'image (M) selon la revendication 1 ou 2, dans lequel l'unité de modification de différence de trajet optique (50) est configurée pour déplacer la première unité d'imagerie (18) le long d'une direction d'axe optique d'un premier trajet optique (L1) pour capturer la première image sur la base d'une distance de déplacement calculée par la Formule (2) ci-dessous :

distance de déplacement = l'intervalle de mise au point cible x (un carré d'un grossissement optique dans le premier trajet optique) (2).

4.  Appareil de capture d'image (M) selon l'une quelconque des revendications 1 à 3, comprenant en outre :

une unité de commande de région (35) pour définir, au niveau d'une zone d'imagerie (20a) de la seconde unité d'imagerie (20), une première région d'imagerie (22A) et une seconde région d'imagerie (22B) pour capturer une image partielle de la seconde image optique ; et

un élément de production de différence de trajet optique (21) qui est disposé sur le second trajet optique (L2), présentant une partie dont l'épaisseur varie de manière continue le long d'une direction dans le plan de la zone d'imagerie (20a), et pour donner une différence de trajet optique à la seconde image optique le long de la direction dans le plan de la zone d'imagerie (20a),

dans lequel l'unité de modification de différence de trajet optique (50) est configurée pour faire que l'unité de commande de région (35) modifie des positions définies de la première région d'imagerie (22A) et de la seconde région d'imagerie (22B) sur la base d'un taux de variation de l'épaisseur dans la direction dans le plan de la zone d'imagerie (20a) et de l'intervalle de mise au point cible.

5.  Procédé de capture d'image comprenant les étapes consistant à :

déplacer un étage (1) sur lequel un échantillon (S) est placé à une vitesse prédéterminée ;

diviser une image optique de l'échantillon (S) en une première image et une seconde image ;

capturer la première image par une première unité d'imagerie (18) ;

capturer la seconde image par une seconde unité d'imagerie (20) ;

analyser la seconde image capturée de manière à commander une position de mise au point du capteur d'image par la première unité d'imagerie (18) sur la base du résultat d'analyse ; et

modifier une différence de trajet optique entre la première image et la seconde image sur la base d'un intervalle de mise au point cible prédéterminé par une unité de modification de différence de trajet optique (50) pour capturer des images d'empilement Z consistant en les premières images au niveau de différentes couches dans une direction de profondeur de l'échantillon (S),

dans lequel la commande de la position de mise au point par l'unité de commande de mise au point (34) et la capture de la première image par la première unité d'imagerie (18) durant le mouvement de l'étage (1) par l'unité de commande d'étage (37) à chaque fois que la différence de trajet optique est modifiée par l'unité de modification de différence de trajet optique (50).

6.  Procédé de capture d'image selon la revendication 5, dans lequel le procédé comprend le déplacement de la seconde unité d'imagerie (20) le long d'une direction d'axe optique d'un second trajet optique (L2) pour capturer la seconde image par l'unité de modification de différence de trajet optique (50) sur la base d'une distance de déplacement calculée par la Formule (1) ci-dessous :

$$\text{distance de déplacement} = \text{l'intervalle de mise au point cible} \times (\text{un carré d'un grossissement optique dans le second trajet optique}) \quad (1).$$

7. Procédé de capture d'image selon la revendication 5 ou 6, dans lequel le procédé comprend le déplacement de la première unité d'imagerie (18) le long d'une direction d'axe optique d'un premier trajet optique (L1) pour capturer la première image par l'unité de modification de différence de trajet optique (50) sur la base d'une distance de déplacement calculée par la Formule (2) ci-dessous :

$$\text{distance de déplacement} = \text{l'intervalle de mise au point cible} \times (\text{un carré d'un grossissement optique dans le premier trajet optique}) \quad (2).$$

8. Procédé de capture d'image selon l'une quelconque des revendications 5 à 7, comprenant en outre les étapes consistant à :

définir, au niveau d'une zone d'imagerie (20a) de la seconde unité d'imagerie (20), une première région d'imagerie (22A) et une seconde région d'imagerie (22B) pour capturer une image partielle de la seconde image ;
par un élément de production de différence de trajet optique (21) qui est disposé sur le second trajet optique (L2), présentant une partie dont l'épaisseur varie de manière continue le long d'une direction dans le plan de la zone d'imagerie (20a), donnant une différence de trajet optique à la seconde image optique le long de la direction dans le plan de la zone d'imagerie (20a), et
modifier des positions définies de la première région d'imagerie (22A) et de la seconde région d'imagerie (22B) sur la base d'un taux de variation de l'épaisseur dans la direction dans le plan de la zone d'imagerie (20a) et de l'intervalle de mise au point cible.

Fig.1

# *Fig.2*

*Fig.3*

(a)

20a 20

22A

22B

(b)

20a 20

22A

22B

d

EP 2 916 159 B1

*Fig.4*

(a)

21A

20a  20

22A

t1

22B

t2

(b)

20a  20

22A

22B

d

# Fig.5

# Fig.6

```
┌─────────────────────────────────────────┐  ┌─33
│          CONTROL PORTION                 │
│                                ┌─34       │
│  ┌─────────────────────────────────────┐ │
│  │      FOCUS CONTROL PORTION           │ │
│  └─────────────────────────────────────┘ │
│                                ┌─35       │
│  ┌─────────────────────────────────────┐ │
│  │     REGION CONTROL PORTION           │ │──────  OPERATING PORTION   ┌─31
│  └─────────────────────────────────────┘ │
│                                ┌─36       │
│  ┌─────────────────────────────────────┐ │
│  │        OBJECTIVE LENS                │ │
│  │       CONTROL PORTION                │ │
│  └─────────────────────────────────────┘ │
│                                ┌─37       │
│  ┌─────────────────────────────────────┐ │
│  │      STAGE CONTROL PORTION           │ │──────  MONITOR   ┌─32
│  └─────────────────────────────────────┘ │
│                                ┌─38       │
│  ┌─────────────────────────────────────┐ │
│  │      IMAGE PRODUCING PORTION         │ │
│  └─────────────────────────────────────┘ │
│                                ┌─39       │
│  ┌─────────────────────────────────────┐ │
│  │   VIRTUAL MICRO IMAGE STORAGE        │ │
│  └─────────────────────────────────────┘ │
│                                ┌─50       │
│  ┌─────────────────────────────────────┐ │
│  │    OPTICAL PATH DIFFERENCE           │ │
│  │      CHANGING PORTION                │ │
│  └─────────────────────────────────────┘ │
└─────────────────────────────────────────┘
```

# Fig.7

(a)

(b)

DISTANCE BETWEEN
OBJECTIVE LENS AND
SURFACE OF SAMPLE

FRONT FOCUS

REAR FOCUS

CONTRAST VALUE

# Fig.8

(a)

(b)

# *Fig.9*

(a)

(b)

## Fig.10

DISTANCE BETWEEN OBJECTIVE LENS AND STAGE

SCANNING TIME

A | B | A | B | A | B | A

## Fig.11

# Fig.12

(a)

IMAGING FIELD — 1 — 40

SCANNING DIRECTION

S

40

(b)

STAGE SPEED v

IMAGING DURATION

C    D    E    F    POSITION

EP 2 916 159 B1

# Fig.13

# *Fig.14*

(a)

(b)

# Fig.15

```
                    ( START )
                        │
                        │              ┌─S01
    ┌───────────────────────────────────┐
    │ CAPTURING OF MACRO IMAGE          │
    │ OF SAMPLE BY MACRO IMAGE          │
    │     CAPTURING DEVICE              │
    └───────────────────────────────────┘
                        │              ┌─S02
    ┌───────────────────────────────────┐
    │  SETTING OF A SCOPE FOR           │
    │  CAPTURING MICRO IMAGES           │
    │   BASED ON MACRO IMAGE            │
    └───────────────────────────────────┘
                        │              ┌─S03
    ┌───────────────────────────────────┐
    │        SETTING OF                 │
    │    FOCUSING CONDITIONS            │
    └───────────────────────────────────┘
                        │
                        ▼              ┌─S04
    ┌───────────────────────────────────┐
    │ CAPTURING OF MICRO IMAGES         │
    │ OF SAMPLE BY MICRO IMAGE          │
    │     CAPTURING DEVICE              │
    └───────────────────────────────────┘
                        │              ┌─S05
    ┌───────────────────────────────────┐
    │       PRODUCING OF                │
    │    VIRTUAL MICRO IMAGE            │
    └───────────────────────────────────┘
                        │
                        ▼         ┌─S06
                      ╱     ╲
                    ╱  HAVE   ╲
                  ╱ ALL IMAGES TO ╲   NO
                 ╱ FORM Z-STACK IMAGES ╲────────┐
                  ╲ BEEN CAPTURED? ╱            │   ┌─S07
                    ╲           ╱      ┌───────────────────────────┐
                      ╲       ╱        │       CHANGE OF           │
                        │              │  OPTICAL PATH DIFFERENCE   │
                       YES             └───────────────────────────┘
                        │
                    ( END )
```

Fig.16

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005202092 A
- JP 2011081211 A

- JP 2008500643 A